# EUROPÄISCHE PATENTSCHRIFT

(11) **EP 4 105 111 B1**
(45) Veröffentlichungstag und Bekanntmachung des Hinweises auf die Patenterteilung: **02.07.2025**
(21) Anmeldenummer: 22176500.1
(22) Anmeldetag: 31.05.2022
(51) Int. Cl.: B62H 5/18, B62H 5/20

(54) **BREMSSCHEIBENSCHLOSS**
BRAKE DISK LOCK
DISPOSITIF DE BLOCAGE DE DISQUES DE FREIN

(30) Priorität: 14.06.2021 DE 102021115329
(43) Veröffentlichungstag der Anmeldung: 21.12.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 0 716 007
- DE-A1- 102007 058 550
- DE-A1- 102018 111 287
- DE-U1- 29 500 444

## Beschreibung

Die Erfindung betrifft ein Bremsscheibenschloss mit einer Kralle, die einen ersten Krallenabschnitt und einen zweiten Krallenabschnitt aufweist. Der erste Krallenabschnitt und der zweite Krallenabschnitt sind zwischen einer Offenstellung und einer Geschlossenstellung der Kralle relativ zueinander beweglich. Die Kralle weist in der Geschlossenstellung eine vorbestimmte lichte Weite auf, um einen Abschnitt einer Bremsscheibe eines Zweirads zu umgreifen. Ferner umfasst die Kralle einen Verriegelungsmechanismus, der dazu ausgebildet ist, die Kralle in der Geschlossenstellung zu verriegeln.

Ein Bremsscheibenschloss dient dazu, ein Zweirad gegen ein unberechtigtes Wegfahren zu sichern, indem eine Bremsscheibe des Zweirads gegen eine Drehbewegung blockiert wird. Hierfür kann das Bremsscheibenschloss in eine Öffnung der Bremsscheibe eingreifen, die zu Belüftungs-/Kühlungszwecken oder zur Gewichtsersparnis an der Bremsscheibe ausgebildet ist.

Ein derartiges Bremsscheibenschloss kann beispielsweise einen Aufnahmespalt aufweisen, in dem die Bremsscheibe aufgenommen wird und der sodann in Querrichtung von einem Riegel durchdrungen wird, um das Bremsscheibenschloss an der Bremsscheibe zu sichern. Die Bedienung eines solchen Bremsscheibenschloss kann unerwünscht aufwendig sein. Insbesondere kann eine Bedienung mit zwei Händen erforderlich sein, wenn mit der einen Hand der Aufnahmespalt des Bremsscheibenschlosses relativ zu der Bremsscheibe ausgerichtet werden muss, um mit der anderen Hand die Verriegelungseinrichtung betätigen zu können, damit der Riegel in die zugeordnete Öffnung der Bremsscheibe trifft. Ein weiterer Nachteil bekannter Bremsscheibenschlösser besteht darin, dass die fest vorgegebene Tiefe des Aufnahmespalts dazu führen kann, dass in der Geschlossenstellung ein unerwünscht großes Spiel zwischen dem Bremsscheibenschloss und der Bremsscheibe besteht, was zu einem unsicheren Sitz des Bremsscheibenschlosses an der Bremsscheibe führen kann. Ein ähnliches Problem kann sich bei Bremsscheibenschlössern des Ratschentyps ergeben, wenn der Benutzer eine in variabler Position einrastende Kralle nicht weit genug schließt und somit aufgrund von Fehlbedienung ein unnötig großes Spiel zwischen der Kralle und der Bremsscheibe verbleibt.

Aus der DE 295 00 444 U1 ist ein Motorrad-Scheibenbremsen-Schloss mit Rastmechanismus bekannt, um ein Motorrad fahrunfähig zu machen. Eine Bremsscheibe des Motorrads kann in eine Vertiefung des Schlosses eingeführt und von einem Verschlussbolzen des Schlosses umgriffen werden. Zum Verriegeln des Schlosses wird der Verschlussbolzen in das Schloss gedrückt und in einer geeigneten Position fixiert. Die DE 10 2018 111287 A1 offenbart ein Bremsscheibenschloss mit einem Alarmmodul, welches dazu ausgebildet ist, einen Alarm auszugeben, wenn eine relevante Lageänderung des Schlosses detektiert wird. Die DE 10 2007 058550 A1 offenbart ebenfalls ein Bremsscheibenschloss mit einer Alarmeinrichtung. Aus der EP 0 716 007 A1 ist eine Verriegelungsanordnung bekannt, die an einer Bremsscheibe eines Fahrzeugs befestigbar ist.

Es ist eine Aufgabe der Erfindung, ein Bremsscheibenschloss zu schaffen, das eine einfache und fehlersichere Bedienung erlaubt und einen sicheren Sitz des Bremsscheibenschlosses an verschiedenen Bremsscheiben gewährleistet.

Diese Aufgabe wird durch ein Bremsscheibenschloss mit den Merkmalen des Anspruchs 1 gelöst.

Bei dem erfindungsgemäßen Bremsscheibenschloss weist die Kralle in der Geschlossenstellung eine vorbestimmte lichte Weite auf, um einen Abschnitt einer Bremsscheibe eines Zweirads zu umgreifen. In dieser Geschlossenstellung mit vorbestimmter lichter Weite kann die Kralle verriegelt werden. Das erfindungsgemäße Bremsscheibenschloss ist durch eine Einstelleinrichtung gekennzeichnet, die dazu ausgebildet ist, die Vorbestimmtheit der lichten Weite der Kralle an unterschiedliche Bremsscheiben anzupassen, wobei die Vorbestimmtheit der lichten Weite der Kralle mittels der Einstelleinrichtung derart anpassbar ist, dass die lichte Weite, mit welcher die Kralle in der Geschlossenstellung einen Aufnahmeraum für die Bremsscheibe effektiv begrenzt, für ein nachfolgendes wiederholtes Befestigen und Verriegeln des Bremsscheibenschlosses an der Bremsscheibe vorbestimmt ist.

Der betreffende Abschnitt der Bremsscheibe kann von der Kralle umgriffen werden, indem einer der beiden Krallenabschnitte in eine Öffnung der Bremsscheibe eingreift und der andere der beiden Krallenabschnitte einen Außenumfang der Bremsscheibe umgreift oder in eine andere Öffnung der Bremsscheibe eingreift. Die Kralle bildet in der Geschlossenstellung somit einen Aufnahmeraum für den betreffenden Abschnitt der Bremsscheibe. Die genannte lichte Weite der Kralle bezeichnet in diesem Zusammenhang das wirksame Innenmaß der Kralle in deren Geschlossenstellung. Die lichte Weite der Kralle soll generell möglichst genau der Erstreckung des umgriffenen Bremsscheibenabschnitts entsprechen, d.h. die Kralle soll an dem Abschnitt der Bremsscheibe mit einem geringen Spiel befestigt sein, damit das Bremsscheibenschloss sicher an der Bremsscheibe sitzt.

Hierfür ist die lichte Weite, mit welcher die Kralle in der Geschlossenstellung den Aufnahmeraum für die Bremsscheibe effektiv begrenzt, einstellbar, d.h. die lichte Weite ist für einen nachfolgenden Gebrauch des Bremsscheibenschlosses vorbestimmt und wird bei dem nachfolgenden Gebrauch beibehalten. Mittels der Einstelleinrichtung kann somit die lichte Weite der Kralle für den nachfolgenden Gebrauch des Bremsscheibenschlosses an die Dimensionen einer bestimmten Bremsscheibe - insbesondere an die Erstreckung des zu umgreifenden Abschnitts der Bremsscheibe - angepasst werden. Dieses Anpassen der vorbestimmten lichten Weite der Kralle bezieht sich also auf das nachfolgende wiederholte Verschließen des Bremsscheibenschlosses an der betreffenden Bremsscheibe und Lösen von dieser Bremsscheibe.

Durch den Aufbau des Bremsscheibenschlosses ist es insbesondere möglich, das Bremsscheibenschloss an verschiedenen Fahrzeugen mit wenigstens zwei Rädern zu nutzen, wie z.B. an einem Motorrad, einem Scooter, einem E-Bike, einem Lastenrad, einem Fahrrad, einem Trike, einem Quad und dergleichen. Durch die Anpassbarkeit der vorbestimmten lichten Weite der Kralle kann insbesondere verhindert werden, dass das Bremsscheibenschloss - etwa weil die Enden der beiden Krallenabschnitte zu weit auseinander stehen - bereits durch geringfügiges Aufbiegen von der Bremsscheibe gelöst werden kann. Ferner kann verhindert oder zumindest erschwert werden, dass infolge zu großen Spiels ein Aufbruchwerkzeug (beispielsweise zum Aufhebeln) in einen Zwischenraum zwischen der Bremsscheibe und dem Bremsscheibenschloss eingeführt werden kann.

Ein Vorteil der Erfindung besteht auch in einer leichten und fehlersicheren Bedienung. Die vorbestimmte lichte Weite der Kralle wird stets eingehalten, da nur in der Geschlossenstellung der Kralle eine Verriegelung erfolgt. Somit ist eine zuverlässige Befestigung der Kralle an der Bremsscheibe durch ein hinreichendes Umgreifen in der Geschlossenstellung mit geringem Spiel gewährleistet, ohne dass der Benutzer darauf achten muss, dass die Kralle stets mit dem maximal möglichen Hub geschlossen wird. Durch die Krallenform kann das Bremsscheibenschloss in der Offenstellung an der Bremsscheibe eingehängt werden. Dies bedeutet, dass eine Einhandbedienung ermöglicht wird, da das Bremsscheibenschloss zum Verriegeln nicht gehalten und relativ zu der Bremsscheibe ausgerichtet werden muss.

Weitere Ausführungsformen der Erfindung sind nachfolgend und in den abhängigen Ansprüchen genannt.

Bei einigen Ausführungsformen kann der Verriegelungsmechanismus, zumindest im Gebrauchszustand des Bremsscheibenschlosses, mit dem ersten Krallenabschnitt fest verbunden sein. Der zweite Krallenabschnitt kann relativ zu dem ersten Krallenabschnitt und zu dem Verriegelungsmechanismus beweglich sein, um die Kralle zwischen der Offenstellung und der Geschlossenstellung zu bewegen. Das Bremsscheibenschloss kann bei einigen Ausführungsformen zudem einen Schlosskörper aufweisen, in dem der Verriegelungsmechanismus gehalten ist und an dem der zweite Krallenabschnitt beweglich geführt ist. Der erste Krallenabschnitt kann insofern auch als Halteabschnitt und der zweite Krallenabschnitt als Schließabschnitt bezeichnet werden.

Bei einigen Ausführungsformen können der erste Krallenabschnitt und der zweite Krallenabschnitt zwischen der Offenstellung und der Geschlossenstellung linear, d.h. geradlinig, relativ zueinander beweglich sein.

Bei einigen Ausführungsformen können der erste Krallenabschnitt und der zweite Krallenabschnitt eine jeweilige Hakenstruktur aufweisen, um den Abschnitt der Bremsscheibe zu umgreifen. Die Kralle kann insbesondere im Wesentlichen C-förmig ausgebildet sein.

Um das Anpassen der vorbestimmten lichten Weite der Kralle zu ermöglichen, gibt es verschiedene Möglichkeiten, wie im Folgenden erläutert wird.

Bei einigen Ausführungsformen kann wenigstens einer der Krallenabschnitte eine Hakenstruktur aufweisen, welche dazu ausgebildet ist, den Abschnitt der Bremsscheibe zu umgreifen und welche einen wirksamen Abstand zu dem Verriegelungsmechanismus (und somit insbesondere zu einem Schlosskörper des Bremsscheibenschlosses) einnimmt, wenn die Kralle geschlossen und verriegelt ist. Die Einstelleinrichtung kann dazu ausgebildet sein, den wirksamen Abstand der Hakenstruktur zu dem Verriegelungsmechanismus bzw. zu dem Schlosskörper anzupassen. Der genannte wirksame Abstand kann insbesondere auf die Bewegungsrichtung der Kralle bezogen sein. Bei derartigen Ausführungsformen kann insbesondere eine Befestigungsposition des genannten Halteabschnitts der Kralle anpassbar sein, oder der genannte Halteabschnitt oder der genannte Schließabschnitt der Kralle kann längenverstellbar sein.

Bei einigen Ausführungsformen kann in einem Gebrauchszustand des Bremsscheibenschlosses der erste Krallenabschnitt in einer anpassbaren fixen Befestigungsposition relativ zu dem Verriegelungsmechanismus befestigt sein. Die Einstelleinrichtung kann dazu ausgebildet sein, die Befestigungsposition des ersten Krallenabschnitts relativ zu dem Verriegelungsmechanismus anzupassen. Diese Befestigungsposition kann eine Position sein, die der erste Krallenabschnitt bei dem nachfolgenden Gebrauch des Bremsscheibenschlosses zum wiederholten Verschließen an der betreffenden Bremsscheibe und Lösen von der Bremsscheibe an dem Verriegelungsmechanismus einnimmt und während des Gebrauchs beibehält, also insbesondere auch während der Bewegung der Kralle zwischen der Offenstellung und der Geschlossenstellung.

Bei einer derartigen Ausführungsform kann das Bremsscheibenschloss einen Halter aufweisen, der den Verriegelungsmechanismus trägt, wobei der erste Krallenabschnitt an dem Halter befestigt sein kann. Der Halter kann insbesondere durch den genannten Schlosskörper gebildet sein.

Bei einigen Ausführungsformen kann die Einstelleinrichtung dazu ausgebildet sein, die vorbestimmte lichte Weite der Kralle aufgrund einer formschlüssigen Verbindung zwischen zwei Komponenten des Bremsscheibenschlosses (z.B. zwischen einem Krallenabschnitt und dem Verriegelungsmechanismus, oder zwischen zwei Krallenabschnitten) gemäß einem vorbestimmten Raster anzupassen. Durch einen Formschluss kann eine besonders hohe Sicherheit der einstellbaren Verbindung gegenüber Aufbruchversuchen erreicht werden. Ein vorbestimmtes Raster der formschlüssigen Verbindung vereinfacht das Anpassen der lichten Weite durch den Benutzer.

Bei einer möglichen derartigen Ausführungsform kann die Einstelleinrichtung eine dem Verriegelungsmechanismus zugeordnete Eingriffskontur (z.B. Zahnung) und eine dem ersten Krallenabschnitt zugeordnete Eingriffsgegenkontur (z.B. Gegenzahnung) aufweisen. Die Eingriffskontur und die Eingriffsgegenkontur können in verschiedenen Befestigungspositionen in Eingriff miteinander bringbar sein und in der jeweiligen Befestigungsposition aneinander sicherbar sein. Die verschiedenen Befestigungspositionen können also dazu dienen, um die vorbestimmte lichte Weite der Kralle in der Geschlossenstellung für den nachfolgenden Gebrauch des Bremsscheibenschlosses einzustellen. Die genannte Eingriffskontur muss nicht unmittelbar an dem Verriegelungsmechanismus ausgebildet sein, sondern kann beispielsweise an dem genannten Halter oder an dem genannten Schlosskörper des Bremsscheibenschlosses vorgesehen sein. Die Eingriffskontur und die Eingriffsgegenkontur können mehrere Zähne aufweisen, die beispielsweise spitz zulaufend, insbesondere sägezahnförmig, oder im Querschnitt rechteckig sind, wobei eine Stufensprungeinstellung ermöglicht wird. Die Sicherung in der jeweiligen Befestigungsposition kann insbesondere mittels eines Sicherungselements erfolgen, welches nachfolgend noch näher beschrieben wird.

Alternativ zu einer Eingriffskontur in Form einer Zahnung und einer Eingriffsgegenkontur in Form einer Gegenzahnung kann die Einstelleinrichtung zum Beispiel eine Lochreihe für Schraubbefestigungen gemäß einem vorbestimmten Raster aufweisen, wobei beispielsweise eine Gewindebohrung mit einer von mehreren Durchtrittsöffnungen in Flucht gebracht werden kann oder eine Durchtrittsöffnung mit einer von mehreren Gewindebohrungen in Flucht gebracht werden kann, und wobei die jeweilige Gewindebohrung einerseits und die jeweilige Durchtrittsöffnung andererseits dem Verriegelungsmechanismus bzw. dem ersten Krallenabschnitt zugeordnet sind, oder umgekehrt.

Bei derartigen Ausführungsformen mit einer anpassbaren fixen Befestigungsposition des ersten Krallenabschnitts kann der erste Krallenabschnitt starr ausgebildet sein und/oder eine feste Länge aufweisen. Der erste Krallenabschnitt kann insbesondere dem genannten Halteabschnitt der Kralle entsprechen.

Bei anderen Ausführungsformen zum Anpassen der vorbestimmten lichten Weite der Kralle kann der die Hakenstruktur aufweisende wenigstens eine Krallenabschnitt eine Verriegelungsstruktur aufweisen, mit welcher der Verriegelungsmechanismus in Eingriff steht, wenn die Kralle geschlossen und verriegelt ist. Die Einstelleinrichtung kann dazu ausgebildet sein, eine wirksame Länge zwischen der Hakenstruktur und der Verriegelungsstruktur des Krallenabschnitts anzupassen. Der betreffende Krallenabschnitt kann bei dieser Ausführungsform relativ zu dem anderen Krallenabschnitt und/oder zu dem Verriegelungsmechanismus (bzw. Schlosskörper) beweglich sein, um die Kralle zwischen der Offenstellung und der Geschlossenstellung zu bewegen. Der betreffende Krallenabschnitt kann somit insbesondere dem genannten Schließabschnitt der Kralle entsprechen, der bei dieser Ausführungsform längenverstellbar ist.

Bei anderen Ausführungsformen zum Anpassen der vorbestimmten lichten Weite der Kralle kann das Bremsscheibenschloss einen Halter aufweisen, der den Verriegelungsmechanismus trägt, wobei der die Hakenstruktur aufweisende wenigstens eine Krallenabschnitt ein Verbindungsende aufweist, an welchem der Krallenabschnitt in einer unveränderlichen Position mit dem Halter verbunden ist (integral einteilig ausgebildet oder mehrteilig dauerhaft verbunden). Die Einstelleinrichtung kann dazu ausgebildet sein, eine wirksame Länge zwischen der Hakenstruktur und dem Verbindungsende des Krallenabschnitts anzupassen. Der Halter kann insbesondere durch den genannten Schlosskörper gebildet sein. Der betreffende Krallenabschnitt kann bei dieser Ausführungsform unbeweglich angeordnet sein, wenn die Kralle zwischen der Offenstellung und der Geschlossenstellung bewegt wird. Der betreffende Krallenabschnitt kann insbesondere dem genannten Halteabschnitt der Kralle entsprechen, der bei dieser Ausführungsform längenverstellbar ist.

Bei derartigen Ausführungsformen mit einem längenverstellbaren (ersten oder zweiten) Krallenabschnittkann die Einstelleinrichtung beispielsweise eine Gewindestange und ein entlang der Gewindestange versetzbares Innengewinde aufweisen, durch welche die wirksame Länge des wenigstens einen Krallenabschnitts anpassbar ist. Die wirksame Länge kann durch ein Verdrehen der Gewindestange und des Innengewindes relativ zueinander in geringer Stufung erfolgen. Die Gewindestange kann mit der Hakenstruktur verbunden und das Innengewinde kann mit der Verriegelungsstruktur oder dem Befestigungsende des Krallenabschnitts verbunden sein, oder umgekehrt. Die Einstelleinrichtung (mit Gewindestange und Innengewinde) kann somit Teil des längenverstellbaren Krallenabschnitts sein.

Bei einigen Ausführungsformen kann das Bremsscheibenschloss dazu ausgebildet sein, dass die Einstelleinrichtung lediglich infolge einer Entriegelung des Verriegelungsmechanismus betätigbar ist, um die vorbestimmte lichte Weite der Kralle an unterschiedliche Bremsscheiben anzupassen. Somit ist es zunächst erforderlich, dass der berechtigte Benutzer das Bremsscheibenschloss bzw. den Verriegelungsmechanismus mittels eines zugeordneten Identmittels entriegelt (z.B. mittels eines Schlüssels oder durch Eingabe oder Übermittlung eines Codes, insbesondere per Funk). Erst nach erfolgter Entriegelung des Bremsscheibenschlosses kann die Einstelleinrichtung betätigt werden, beispielsweise indem die Einstelleinrichtung nur in der Offenstellung der Kralle oder bei von der Bremsscheibe gelöstem Bremsscheibenschloss überhaupt zugänglich ist, wie nachfolgend noch erläutert wird. Hierdurch wird verhindert, dass das Bremsscheibenschloss durch Manipulation der Einstelleinrichtung von der Bremsscheibe gelöst werden kann.

Bei einigen Ausführungsformen kann die Einstelleinrichtung ein Sicherungselement aufweisen, das dazu ausgebildet ist, eine Einstellung (d.h. einen eingestellten Wert) der vorbestimmten lichten Weite der Kralle zu sichern. Das Sicherungselement kann von der Bremsscheibe oder von einem Teil des Bremsscheibenschlosses verdeckt sein und/oder das Sicherungselement kann gegen eine Bewegung blockiert sein, wenn das Bremsscheibenschloss an der Bremsscheibe angebracht ist und wenn die Kralle geschlossen und verriegelt ist. Das Sicherungselement kann beispielsweise mindestens eine Schraube oder Mutter umfassen, die eine Position eines anderen Elements der Einstelleinrichtung sichert, wobei die Schraube oder Mutter in Geschlossenstellung der Kralle durch die Kralle gegen Verstellung selbst gesichert ist. Alternativ kann das Sicherungselement beispielsweise ein gegen Verstellen gesicherter Metallstift sein.

Bei einigen Ausführungsformen kann die Kralle in Richtung der Offenstellung vorgespannt sein. Die Vorspannung kann durch eine Schraubenfeder, Torsionsfeder oder Wellenfeder erreicht werden. Aufgrund einer derartigen Vorspannung kann die Kralle sich nach einem Entriegeln automatisch in die Offenstellung bewegen, sodass für den Benutzer leicht erkennbar ist, wenn die Kralle sich in der Offenstellung befindet. Ferner wird aufgrund der Vorspannung die Offenstellung stabil eingenommen. Hierdurch vereinfachen sich das Anlegen des Bremsscheibenschlosses an der Bremsscheibe (insbesondere das erläuterte Einhängen) und/oder eine Einhandbedienung.

Bei einigen Ausführungsformen kann der Verriegelungsmechanismus einen Riegel aufweisen, der in einer Verriegelungsstellung - wenn die Kralle geschlossen ist - den zweiten Krallenabschnitt an dem ersten Krallenabschnitt verriegelt und in einer Freigabestellung den zweiten Krallenabschnitt für eine Bewegung relativ zu dem ersten Krallenabschnitt freigibt. Der Verriegelungsmechanismus kann einen Schließzylinder aufweisen, um den Riegel zu betätigen.

Bei einer derartigen Ausführungsform kann der Riegel in Richtung der Verriegelungsstellung vorgespannt sein, wobei der Riegel dazu ausgebildet ist, durch Bewegen der Kralle aus der Offenstellung in die Geschlossenstellung zunächst in Richtung der Freigabestellung zurückgedrängt zu werden und sodann aufgrund der Vorspannung in die Verriegelungsstellung zu schnappen. Die Vorspannung des Riegels kann beispielsweise durch eine Spiral- oder Torsionsfeder erfolgen, die mit einem Ende an dem Riegel angreift und mit dem anderen Ende an einem Gehäuse des Verriegelungsmechanismus und/oder an dem genannten Schlosskörper abgestützt ist. Durch die Vorspannung wird eine Automatikfunktion der Verriegelung des Bremsscheibenschlosses bewirkt, sodass für ein Verriegeln des Schlosses der Schließzylinder nicht manuell betätigt werden muss. Hierdurch vereinfacht sich wiederum die genannte Einhandbedienung des Bremsscheibenschlosses.

Bei einer derartigen Ausführungsform mit automatischer Verriegelung kann der Riegel drehbar gelagert sein und eine Mantelfläche mit einer tangentialen Aussparung aufweisen, wobei die Aussparung in der Freigabestellung des Riegels eine Verriegelungserhebung des zweiten Krallenabschnitts freigibt. Der Riegel kann somit als ein Drehriegel ausgebildet sein, der beispielsweise drehbar an einer Mantelfläche des Schließzylinders gelagert ist. Die Drehachse des Drehriegels kann mit einer Drehachse des Schließzylinders zusammenfallen.

Alternativ zu einem rein mechanischen Verriegelungsmechanismus (mit Schließzylinder) kann auch ein elektromechanischer Verriegelungsmechanismus vorgesehen sein, beispielsweise mit Elektromotor oder Elektromagnet als elektrisch ansteuerbarer Aktor.

Um eine Einhandbedienung des Bremsscheibenschlosses zu vereinfachen, kann wenigstens einer der Krallenabschnitte - insbesondere der erste Krallenabschnitt - dazu ausgebildet sein, in eine Öffnung der Bremsscheibe einzugreifen und hierdurch das Bremsscheibenschloss an der Bremsscheibe hängend zu halten. Somit kann das Bremsscheibenschloss auch in der Offenstellung der Kralle an der Bremsscheibe frei hängend angeordnet sein, ohne dass der Benutzer das Bremsscheibenschloss mit einer Hand halten und positionieren muss, um mit der anderen Hand den Verriegelungsmechanismus betätigen zu können. Hierfür kann an dem betreffenden Krallenabschnitt insbesondere die bereits genannte Hakenstruktur ausgebildet sein.

Bei einigen Ausführungsformen kann das Bremsscheibenschloss eine Alarmeinrichtung zum Ausgeben eines Alarmsignals aufweisen, wobei die Alarmeinrichtung dazu ausgebildet ist, durch Bewegen der Kralle in die Geschlossenstellung aktiviert zu werden und durch Bewegen der Kralle aus der Geschlossenstellung in die Offenstellung deaktiviert zu werden. Hierdurch kann erreicht werden, dass die Alarmeinrichtung automatisch aktiviert und deaktiviert wird, wenn der Benutzer die Kralle zwischen der Geschlossenstellung und der Offenstellung bewegt, insbesondere infolge einer Entriegelungsbetätigung des Verriegelungsmechanismus.

Die Alarmeinrichtung kann einen Bewegungssensor umfassen, der Positionsänderungen und/oder Beschleunigungen bzw. Beschleunigungsänderungen erfasst, die beispielsweise bei Überschreiten eines Schwellenwerts die Ausgabe eines Alarmsignals auslösen. Der Beschleunigungssensor kann auch beim Bewegen des Zweirads durch den berechtigten Benutzer, ohne das Bremsscheibenschloss von der Bremsscheibe gelöst zu haben, ein akustisches Alarmsignal als Vergessschutz ausgeben. Ferner kann bei Aktivierung der Alarmeinrichtung ein kurzer Aktivierungston ertönen, der die Aktivierung der Alarmfunktion akustisch bestätigt.

Bei einigen Ausführungsformen kann die Alarmeinrichtung einen Aktivierungsschalter aufweisen, der dazu ausgebildet ist, in der Geschlossenstellung der Kralle von dem zweiten Krallenabschnitt oder von einem mit dem zweiten Krallenabschnitt verbundenen Teil des Bremsscheibenschlosses automatisch betätigt zu werden. Der Aktivierungsschalter kann insbesondere als ein Kontaktschalter ausgebildet sein. Die Aktivierung der Alarmeinrichtung kann beispielsweise durch zusammenwirkende Betätigungsschrägen an dem zweiten Krallenabschnitt und an der Alarmeinrichtung ausgelöst werden. Wenn der Aktivierungsschalter in der Offenstellung der Kralle nicht länger betätigt ist, kann hierdurch die Deaktivierung der Alarmeinrichtung ausgelöst werden.

Die Auswertung der Signale des genannten Bewegungssensors und/oder des genannten Aktivierungsschalters kann durch eine Steuerschaltung der Alarmeinrichtung erfolgen.

Bei einer derartigen Ausführungsform kann die Alarmeinrichtung in einem Gehäuseabschnitt des Bremsscheibenschlosses angeordnet sein, der mit dem ersten Krallenabschnitt fest verbunden ist, wobei die Alarmeinrichtung lediglich infolge einer Entriegelung des Verriegelungsmechanismus zugänglich ist. Hierdurch wird erreicht, dass die Alarmeinrichtung (beispielsweise für einen Batteriewechsel) nur für den berechtigten Benutzer zugänglich ist, der über das dem Verriegelungsmechanismus zugeordnete Identmittel verfügt (z.B. Schlüssel).

Insbesondere kann der Gehäuseabschnitt des Bremsscheibenschlosses eine Zugangsöffnung aufweisen, über welche die Alarmeinrichtung zugänglich ist. Beispielsweise kann das Bremsscheibenschloss dazu ausgebildet sein, dass in der Geschlossenstellung der Kralle die Zugangsöffnung von dem zweiten Krallenabschnitt verdeckt ist. In der Offenstellung der Kralle hingegen kann die Zugangsöffnung für einen Zugang freigegeben sein. Bei anderen Ausführungsformen kann die Zugangsöffnung beispielsweise über einen Deckel abgedeckt sein, der nur im entriegelten Zustand des Bremsscheibenschlosses zu öffnen ist. Hierdurch ist ein inhärenter Schutz der Alarmeinrichtung gegenüber Manipulationsversuchen gewährleistet.

Bei einigen Ausführungsformen mit zusätzlicher Sicherungsfunktion kann das Bremsscheibenschloss einen ersten, dem ersten Krallenabschnitt zugeordneten Sicherungsabschnitt und einen zweiten, dem zweiten Krallenabschnitt zugeordneten Sicherungsabschnitt aufweisen. Der erste Sicherungsabschnitt und der zweite Sicherungsabschnitt können in der Offenstellung der Kralle eine Aufnahmeöffnung zum Einführen einer Öse eines flexiblen Sicherungsteils, insbesondere einer Kette, bilden. Der erste Sicherungsabschnitt und der zweite Sicherungsabschnitt können in der Geschlossenstellung der Kralle eine umfänglich geschlossene Begrenzung der Aufnahmeöffnung bilden, um die eingeführte Öse an dem Bremsscheibenschloss zu sichern. Einer der beiden Sicherungsabschnitte kann beispielsweise durch einen Teil eines Schlosskörpers des Bremsscheibenschlosses gebildet sein. Das Bremsscheibenschloss kann somit nicht nur zum Blockieren einer Bremsscheibe des Zweirads, sondern auch zum Festlegen des Zweirads an einem Umgebungsobjekt und/oder zum Sichern anderer Objekte (z.B. Helm) an dem Zweirad dienen.

Die Erfindung wird nachfolgend lediglich beispielhaft unter Bezugnahme auf die Zeichnungen erläutert.
- Fig. 1A: zeigt eine Perspektivansicht eines Bremsscheibenschlosses in einer Geschlossenstellung.
- Fig. 1B: zeigt eine Perspektivansicht des Bremsscheibenschlosses in der Geschlossenstellung ohne Schlosskörper.
- Fig. 1C: zeigt Teile des Bremsscheibenschlosses in einer perspektivischen Schnittansicht.
- Fig. 2A: zeigt eine Schnittdarstellung von Teilen des Bremsscheibenschlosses in einer Draufsicht des Bremsscheibenschlosses in der Geschlossenstellung.
- Fig. 2B: zeigt eine der Fig. 2A entsprechende Schnittdarstellung in einer Offenstellung.
- Fig. 3: zeigt eine perspektivische Ansicht von Teilen einer alternativen Ausführungsform eines Bremsscheibenschlosses mit Gewindestange.

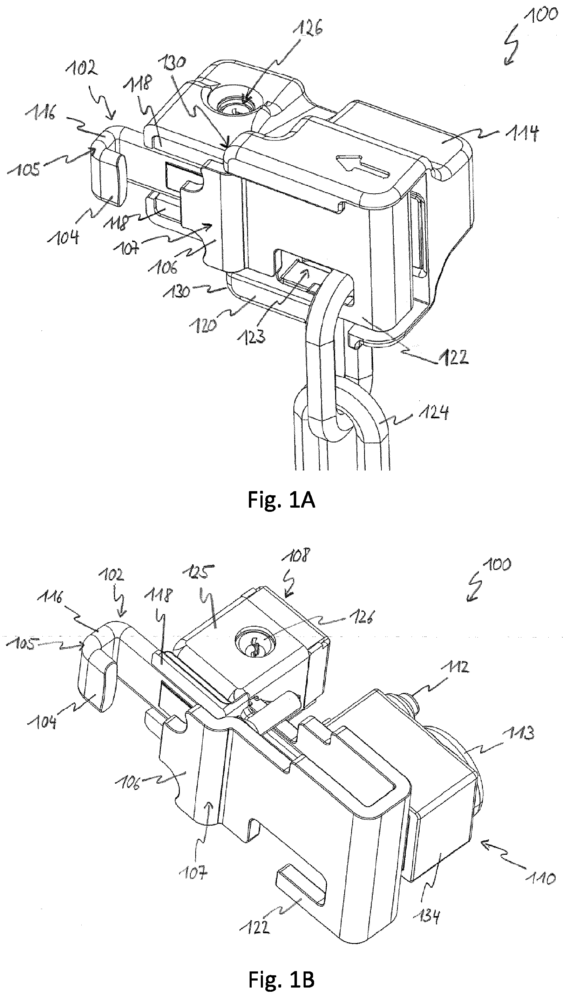

Fig. 1A zeigt die Rückseite eines Bremsscheibenschlosses 100 in einer perspektivischen Ansicht in einer Geschlossenstellung. Das Bremsscheibenschloss 100 umfasst einen Schlosskörper 114 und eine Kralle 102, die einen ersten Krallenabschnitt 104 und einen zweiten Krallenabschnitt 106 aufweist. Wie nachfolgend noch erläutert wird, ist der erste Krallenabschnitt 104 in einem Gebrauchszustand des Bremsscheibenschlosses 100 an dem Schlosskörper 114 unbeweglich gehalten, und der zweite Krallenabschnitt 106 ist an dem Schlosskörper 114 beweglich geführt und in der Geschlossenstellung der Kralle 102 verriegelbar. Der erste Krallenabschnitt 104 und der zweite Krallenabschnitt 106 bilden an ihren freien Enden eine jeweilige Hakenstruktur 105 bzw. 107. Der Schlosskörper 114 kann durch ein Metallgussteil gebildet sein (z.B. Zinkdruckguss). Der erste Krallenabschnitt 104 und der zweite Krallenabschnitt 106 können durch gestanzte und gebogene Metallteile gebildet sein.

Das Bremsscheibenschloss 100 umfasst einen ersten Sicherungsabschnitt 120, der dem ersten Krallenabschnitt 104 zugeordnet und durch einen Teil des Schlosskörpers 114 gebildet ist, und einen zweiten Sicherungsabschnitt 122, der durch einen Teil des zweiten Krallenabschnitts 106 gebildet ist. Der erste Sicherungsabschnitt 120 und der zweite Sicherungsabschnitt 122 bilden in der Offenstellung der Kralle 102 eine Aufnahmeöffnung 123 zum Einführen einer Öse eines flexiblen Sicherungsteils 124. In der Geschlossenstellung der Kralle 102 bilden der erste Sicherungsabschnitt 120 und der zweite Sicherungsabschnitt 122 eine umfänglich geschlossene Begrenzung der Aufnahmeöffnung 123, um die eingeführte Öse an dem Bremsscheibenschloss 100 zu sichern.

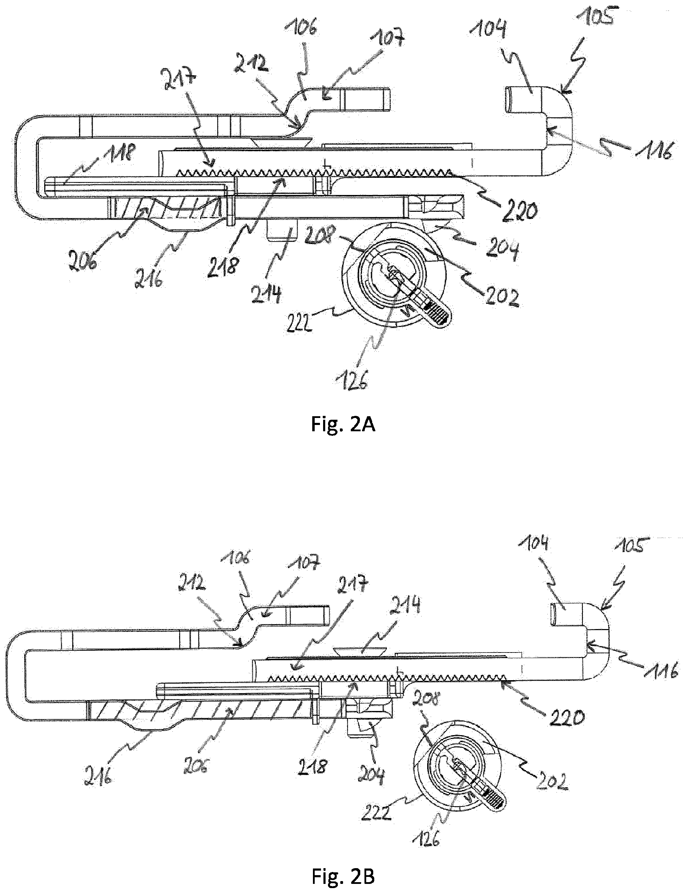

Fig. 1B zeigt eine Perspektivansicht des Bremsscheibenschlosses 100 in der Geschlossenstellung der Kralle 102 ohne Schlosskörper 114. Das Bremsscheibenschloss 100 umfasst einen Verriegelungsmechanismus 108, der innerhalb eines zweiteiligen Zylindergehäuses 125 einen Schließzylinder 126 aufweist, und der dazu ausgebildet ist, die Kralle 102 in der Geschlossenstellung zu verriegeln. Hierfür weist der Verriegelungsmechanismus 108 einen Drehriegel 202 auf, wie im Zusammenhang mit Fig. 2A und 2B noch erläutert wird. Der Verriegelungsmechanismus 108 ist innerhalb des Schlosskörpers 114 angeordnet, der insofern als Halter zum Halten des Verriegelungsmechanismus 108 sowie des ersten Krallenabschnitts 104 und zum Führen des beweglichen zweiten Krallenabschnitts 106 dient.

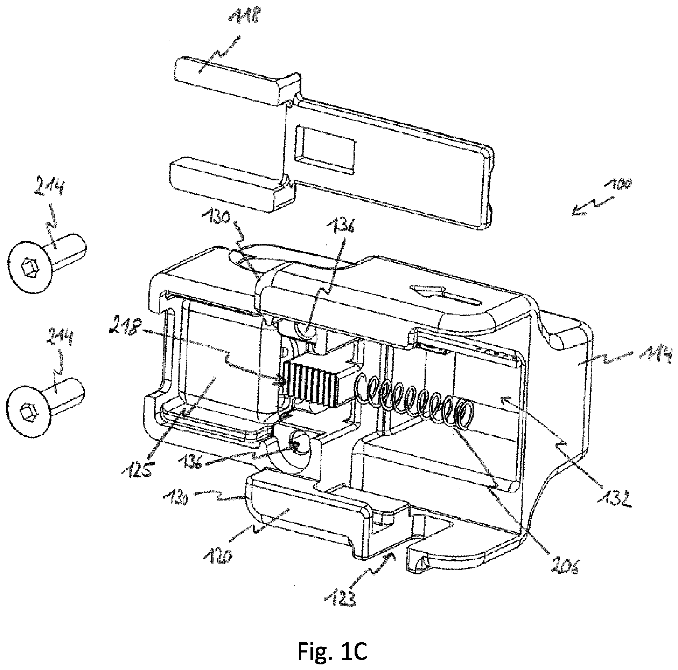

Das Bremsscheibenschloss 100 umfasst ferner eine Alarmeinrichtung 110, die in einem Gehäuseabschnitt 132 (Fig. 1C) des Bremsscheibenschlosses 100 angeordnet ist. Die Alarmeinrichtung 110 weist ein Gehäuse 134, einen Aktivierungsschalter 112, einen Bewegungssensor (nicht gezeigt), eine Steuerschaltung (nicht gezeigt) und einen akustischen Signalgeber 113 auf (Fig. 1B).

Ferner ist eine Abdeckung 118 dazu ausgebildet, die offene Rückseite des Schlosskörpers 114 und somit den Verriegelungsmechanismus 108 und die Alarmeinrichtung 110 abzudecken. In Fig. 1C ist die Abdeckung 118 aus ihrer ursprünglichen Position herausgelöst dargestellt.

Das Bremsscheibenschloss 100 kann in einer Offenstellung der Kralle 102 an einer Bremsscheibe eines Zweirads (nicht gezeigt) angebracht werden, indem die Hakenstruktur 105 des ersten Krallenabschnitts 104 in eine Öffnung der Bremsscheibe eingeführt wird, um einen Abschnitt der Bremsscheibe zu umgreifen. Das Bremsscheibenschloss 100 wird dazu in einer Ebene parallel zu der Erstreckungsebene der Bremsscheibe ausgerichtet, so dass sich beim Loslassen des Bremsscheibenschlosses 100 die Bremsscheibe an einer ersten Abstützstelle 116 des ersten Krallenabschnitts 104 und an einer zweiten Abstützstelle 130 des Schlosskörpers 114 abstützt. Durch Verbringen der Kralle 102 aus der Offenstellung in die in Fig. 1A und 1B gezeigte Geschlossenstellung wird das Bremsscheibenschloss 100 verriegelt und an der Bremsscheibe gesichert. Dies geschieht, indem der zweite Krallenabschnitt 106 der Kralle 102 in Richtung des ersten Krallenabschnitts 104 und des Schlosskörpers 114 bewegt wird, wie nachfolgend noch genauer erläutert wird.

Fig. 2A und Fig. 2B zeigen eine Schnittdarstellung von Teilen des Bremsscheibenschlosses 100 (ohne Schlosskörper 114) in einer Draufsicht in der Geschlossenstellung bzw. in der Offenstellung. Die Krallenabschnitte 104, 106 sind zwischen einer Offenstellung und einer Geschlossenstellung der Kralle 102 relativ zueinander beweglich. Die Kralle 102 weist in der Geschlossenstellung gemäß Fig. 2A eine vorbestimmte lichte Weite auf, um einen Abschnitt einer Bremsscheibe eines Zweirads zu umgreifen. Die lichte Weite der Kralle 102 bezeichnet das Innenmaß der Kralle 102 in deren Geschlossenstellung, also insbesondere den Abstand zwischen der ersten Abstützstelle 116 des ersten Krallenabschnitts 104 einerseits und der zweiten Abstützstelle 130 des Schlosskörpers 114 und einer dritten Abstützstelle 212 des zweiten Krallenabschnitts 106 andererseits. Die zweite Abstützstelle 130 des Schlosskörpers 114 (Fig. 1A) und die dritte Abstützstelle 212 des zweiten Krallenabschnitts 106 (Fig. 2A) sind bei diesem Ausführungsbeispiel in der Geschlossenstellung der Kralle 102 ungefähr auf gleicher Höhe angeordnet. Die lichte Weite der Kralle 102 kann im Zusammenhang mit der Erfindung jedoch generell auch das Innenmaß bzw. den Abstand zwischen den Enden der beiden Krallenabschnitte 104, 106 bezeichnen.

Der erste Krallenabschnitt 104 der Kralle 102 ist in einem Gebrauchszustand des Bremsscheibenschlosses 100 in einer anpassbaren fixen Befestigungsposition relativ zu dem Schlosskörper 114 und somit relativ zu dem Verriegelungsmechanismus 108 und dem bereits genannten Drehriegel 202 befestigt. Eine Einstelleinrichtung 217 des Bremsscheibenschlosses 100 ist dazu ausgebildet, die Befestigungsposition des ersten Krallenabschnitts 104 relativ zu dem Verriegelungsmechanismus 108 an verschiedene Bremsscheiben anpassen zu können. Die Einstelleinrichtung 217 kann derart ausgebildet sein, dass sie eine dem Schlosskörper 114 bzw. dem Verriegelungsmechanismus 108 zugeordnete Eingriffskontur in Form einer Zahnung 218 und eine dem ersten Krallenabschnitt 104 zugeordnete Eingriffsgegenkontur in Form einer Gegenzahnung 220 aufweist. Die Zahnung 218 und die Gegenzahnung 220 können in verschiedenen Befestigungspositionen in Eingriff miteinander gebracht und aneinander festgelegt werden. Die Zahnung 218, die dem Verriegelungsmechanismus 108 zugeordnet ist, kann an der dem ersten Krallenabschnitt 104 zugewandten Seite des Schlosskörpers 114 angebracht sein. Die Gegenzahnung 220, die dem ersten Krallenabschnitt 104 zugeordnet ist, kann an der dem Schlosskörper 114 zugewandten Seite des ersten Krallenabschnitts 104 angebracht sein. Die Zahnung 218 und die Gegenzahnung 220 können durch ein Sicherungselement, hier beispielhaft als zwei Sicherungsschrauben 214 ausgebildet, aneinander gesichert werden, um die Befestigungsposition des ersten Krallenabschnitts 104 zu fixieren.

Die Einstelleinrichtung 217 ist somit dazu ausgebildet, die vorbestimmte lichte Weite der Kralle 102 an unterschiedliche Bremsscheiben anzupassen. Hierzu können die Sicherungsschrauben 214 in der Offenstellung (Fig. 2B) der Kralle 102 gelockert werden, so dass der gegenseitige Eingriff der Zahnung 218 und der Gegenzahnung 220 gelöst werden kann. Die lichte Weite der Kralle 102 kann durch Verschieben des ersten Krallenabschnitts 104 in eine gewünschte Position eingestellt werden. Sobald die gewünschte Position erreicht ist, können die Zahnung 218 und die Gegenzahnung 220 wieder in Eingriff gebracht werden und mittels der Sicherungsschrauben 214 aneinander gesichert werden.

In Fig. 1C sind die zwei Sicherungsschrauben 214 aus ihrer ursprünglichen Position herausgelöst dargestellt. Zum Sichern der Zahnung 218 und der Gegenzahnung 220 werden die Sicherungsschrauben 214 jeweils in eine Gewindebohrung 136 des Schlosskörpers 114 eingeführt, sobald sich die Zahnung 218 und die Gegenzahnung 220 in der gewünschten Befestigungsposition des ersten Krallenabschnitts 104 im Eingriff befinden. Durch Drehung der Sicherungsschrauben 214 im Uhrzeigersinn werden der erste Krallenabschnitt 104 und somit die Gegenzahnung 220 gegen die Zahnung 218 gedrückt und gegeneinander gesichert.

Die somit angepasste Befestigungsposition des ersten Krallenabschnitts 104 ist eine Position, die der erste Krallenabschnitt 104 bei dem nachfolgenden Gebrauch des Bremsscheibenschlosses 100 zum wiederholten Verschließen an der betreffenden Bremsscheibe und Lösen von der Bremsscheibe relativ zu dem Schlosskörper 114 und somit relativ zu dem Verriegelungsmechanismus 108 einnimmt und während des Gebrauchs beibehält, also insbesondere auch während der Bewegung der Kralle 102 zwischen der Offenstellung und der Geschlossenstellung.

Nachfolgend wird die Wirkungsweise des Verriegelungsmechanismus 108 genauer erläutert. Der mittels des Schließzylinders 126 betätigbare Drehriegel 202 ist dazu ausgebildet, die Kralle 102 in der Geschlossenstellung zu verriegeln (Fig. 2A). Der Drehriegel 202 ist in Richtung seiner Verriegelungsstellung vorgespannt, beispielsweise durch eine Torsionsfeder (nicht gezeigt). In der Darstellung gemäß Fig. 2A und 2B ist die Vorspannung entgegen dem Uhrzeigersinn gerichtet. Der Drehriegel 202 ist drehbar an einer Mantelfläche 222 des Schließzylinders 126 gelagert, wobei die Drehachse des Drehriegels 202 und die Drehachse des Schließzylinders 126 zusammenfallen. Der Drehriegel 202 weist an einer äußeren zylindrischen Mantelfläche 222 eine tangentiale Aussparung 208 auf.

Durch ein Bewegen der Kralle 102, insbesondere des zweiten Krallenabschnitts 106, aus der Offenstellung in die Geschlossenstellung wird der vorgespannte Drehriegel 202 von einer Verriegelungsstruktur in Form einer Verriegelungserhebung 204 des zweiten Krallenabschnitts 106 temporär in Richtung einer Freigabestellung zurückgedrängt. Hierfür greift die Verriegelungserhebung 204 an einer Begrenzung der tangentialen Aussparung 208 des Drehriegels 202 an. Sobald die Verriegelungserhebung 204 den Drehriegel 202 so weit in Richtung der Freigabestellung zurückgedrängt hat, dass die tangentiale Aussparung 208 ungefähr parallel zu der Bewegungsrichtung der Verriegelungserhebung 204 verläuft, wird bei einer weiteren Verschiebung der Verriegelungserhebung 204 in Richtung der Freigabestellung der Kontakt zwischen der Verriegelungserhebung 204 und der Begrenzung der tangentialen Aussparung 208 gelöst und der Drehriegel 202 kann aufgrund seiner Vorspannung zurück in die Verriegelungsstellung schnappen. Die Kralle 102, insbesondere der zweite Krallenabschnitt 106, ist somit in der Geschlossenstellung verriegelt, da die Verriegelungserhebung 204 nun durch den Drehriegel 202 an einem Zurückziehen in Richtung der Offenstellung gehindert wird. Erst durch ein Entriegeln des Verriegelungsmechanismus 108 durch Betätigen des Schließzylinders 126 mit einem zugeordneten Schlüssel, d.h. einem Verbringen des Drehriegels 202 von der Verriegelungsstellung in die Freigabestellung, wird die Bewegungsbahn der Verriegelungserhebung 204 in Richtung der Offenstellung der Kralle 102 freigegeben, indem die tangentiale Aussparung 208 in der Freigabestellung des Drehriegels 202 achsenparallel zu der Bewegungsrichtung der Verriegelungserhebung 204 ausgerichtet wird.

Das Bremsscheibenschloss 100 umfasst eine Rückstellfeder 206 in Form einer Spiralfeder, die zwischen dem zweiten Krallenabschnitt 106 und der Abdeckung 118 angebracht ist. Beim Schließen des Bremsscheibenschlosses 100 bzw. der Kralle 102 wird die Rückstellfeder 206 durch Bewegen des zweiten Krallenabschnitts 106 in Richtung des ersten Krallenabschnitts 104 vorgespannt. Bei Entriegelung des Bremsscheibenschlosses 100 durch Betätigen des Schließzylinders 126 mittels des zugeordneten Schlüssels wird der zweite Krallenabschnitt 106 durch die Rückstellfeder 206 von der Geschlossenstellung in die Offenstellung der Kralle 102 gedrängt.

Die Alarmeinrichtung 110 des Bremsscheibenschlosses 100 kann durch Bewegen der Kralle 102 aus der Offenstellung in die Geschlossenstellung aktiviert und durch Bewegen der Kralle 102 aus der Geschlossenstellung in die Offenstellung deaktiviert werden. Hierzu kann eine Aktivierungserhebung 216 des zweiten Krallenabschnitts 106 den als Kontaktschalter ausgebildeten Aktivierungsschalter 112 der Alarmeinrichtung 110 betätigen, sobald die Kralle 102 von der Offenstellung in die Geschlossenstellung gebracht wird. Die Aktivierungserhebung 216 kann den Aktivierungsschalter 112 direkt oder indirekt betätigen. Bei einer indirekten Betätigung - wie bei dem gezeigten Ausführungsbeispiel vorgesehen - kann die Aktivierungserhebung 216 ein bewegliches Gehäuse 134 der Alarmeinrichtung 110 gegen den Schlosskörper 114 drücken und dadurch den Aktivierungsschalter 112 der Alarmeinrichtung 110 betätigen. Solange sich die Kralle 102 in Geschlossenstellung befindet, ist die Alarmeinrichtung 110 aktiviert.

Durch Entriegeln des Bremsscheibenschlosses 100 wird, wie beschrieben, der zweite Krallenabschnitt 106 durch die Rückstellfeder 206 in die Offenstellung der Kralle 102 zurückgedrängt. Dadurch wird der Aktivierungsschalter 112 der Alarmeinrichtung 110 deaktiviert. Dies kann entweder - im Falle einer direkten Betätigung - durch Lösen der Aktivierungserhebung 216 vom Aktivierungsschalter 112 erfolgen, oder - im Falle der gezeigten indirekten Betätigung - indem durch das Zurückdrängen des zweiten Krallenabschnitts 106 und damit der Aktivierungserhebung 216 in die Offenstellung der Kralle 102 das Gehäuse 134 der Alarmeinrichtung 110 wieder zurück in die Ausgangsstellung weichen kann. Dadurch wird das Gehäuse 134 der Alarmeinrichtung 110 nicht weiter gegen den Schlosskörper 114 gedrückt und der Aktivierungsschalter 112 wird deaktiviert. Das Zurückstellen des Gehäuses 134 der Alarmeinrichtung 110 kann durch eine Rückstellkraft erfolgen, die beispielsweise durch Komprimieren einer Silikonschicht zwischen dem Gehäuse 134 der Alarmeinrichtung 110 und dem Schlosskörper 114 aufgrund der Anpresskraft durch die Aktivierungserhebung 216 entsteht.

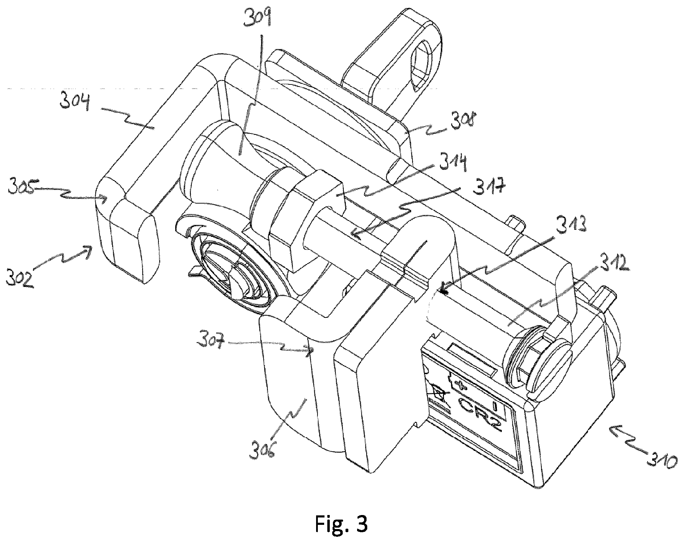

Fig. 3 zeigt eine perspektivische Ansicht einer alternativen Ausführungsform eines Bremsscheibenschlosses 100 mit einem ersten Krallenabschnitt 304 und einem zweiten Krallenabschnitt 306 einer Kralle 302; ferner mit einem Verriegelungsmechanismus 308 und mit einer Alarmeinrichtung 310. Der erste Krallenabschnitt 304 umfasst eine Hakenstruktur 305 und ist mit dem Verriegelungsmechanismus 308 fest verbunden. Der zweite Krallenabschnitt 306 umfasst eine Hakenstruktur 307 an dem einen Ende und eine Gewindestange 312 mit einer Verriegelungsstruktur 309 an dem anderen Ende, die eine klobenartige Verdickung bildet. Die Verriegelungsstruktur 309 des zweiten Krallenabschnitts 306 kann in der gezeigten Geschlossenstellung der Kralle 302, ähnlich wie im Zusammenhang mit Fig. 2A und 2B erläutert, von dem Verriegelungsmechanismus 308 verriegelt werden. Eine Einstelleinrichtung 317 umfasst die Gewindestange 312 und ein entlang der Gewindestange 312 versetzbares Innengewinde 313 der Hakenstruktur 307 des zweiten Krallenabschnitts 306. Durch die Einstelleinrichtung 317 kann die wirksame Länge des zweiten Krallenabschnitts 306 an die Dimensionen unterschiedlicher Bremsscheiben angepasst werden. Die Position der Hakenstruktur 307 an der Gewindestange 312 - und somit die wirksame Länge des zweiten Krallenabschnitts 306 - können mittels eines Sicherungselements 314, hier als Mutter ausgebildet, gesichert werden. Hierfür ist das Sicherungselement 314 in der Geschlossenstellung des Bremsscheibenschlosses 100 durch Formschluss gegen ein Verdrehen gesichert, indem das Sicherungselement 314 formschlüssig im Schlosskörper (in Fig. 3 nicht gezeigt) aufgenommen ist. In der Offenstellung des Bremsscheibenschlosses 100 wird der Formschluss des Sicherungselements 314 gelöst, und die wirksame Länge des zweiten Krallenabschnitts 306 kann durch Drehung der Gewindestange 312 in geringen Stufensprüngen (abhängig von der Ganghöhe des Gewindes) angepasst werden.

### Bezugszeichenliste

- 100: Bremsscheibenschloss
- 102: Kralle
- 104: erster Krallenabschnitt
- 105: Hakenstruktur
- 106: zweiter Krallenabschnitt
- 107: Hakenstruktur
- 108: Verriegelungsmechanismus
- 110: Alarmeinrichtung
- 112: Aktivierungsschalter
- 113: Signalgeber
- 114: Schlosskörper
- 116: erste Abstützstelle
- 118: Abdeckung
- 120: erster Sicherungsabschnitt
- 122: zweiter Sicherungsabschnitt
- 123: Aufnahmeöffnung
- 124: Sicherungsteil
- 125: Zylindergehäuse
- 126: Schließzylinder
- 130: zweite Abstützstelle
- 132: Gehäuseabschnitt
- 134: Gehäuse der Alarmeinrichtung
- 136: Gewindebohrung

- 202: Verriegelungsmechanismus, ausgebildet als Drehriegel
- 204: Verriegelungserhebung
- 206: Rückstellfeder
- 208: tangentiale Aussparung
- 212: dritte Abstützstelle
- 214: Sicherungsschraube
- 216: Aktivierungserhebung
- 217: Einstelleinrichtung
- 218: Eingriffskontur in Form einer Zahnung
- 220: Eingriffsgegenkontur in Form einer Gegenzahnung
- 222: Mantelfläche

- 302: Kralle
- 304: erster Krallenabschnitt
- 305: Hakenstruktur
- 306: zweiter Krallenabschnitt
- 307: Hakenstruktur
- 308: Verriegelungsmechanismus
- 309: Verriegelungsstruktur
- 310: Alarmeinrichtung
- 312: Gewindestange
- 313: Innengewinde
- 314: Sicherungselement
- 317: Einstelleinrichtung

## Patentansprüche

1. Bremsscheibenschloss (100),
mit einer Kralle (102, 302), die einen ersten Krallenabschnitt (104, 304) und einen zweiten Krallenabschnitt (106, 306) aufweist, die zwischen einer Offenstellung und einer Geschlossenstellung der Kralle (102, 302) relativ zueinander beweglich sind, wobei die Kralle (102, 302) in der Geschlossenstellung eine vorbestimmte lichte Weite aufweist, um einen Abschnitt einer Bremsscheibe eines Zweirads zu umgreifen; und
ferner mit einem Verriegelungsmechanismus (108, 308), der dazu ausgebildet ist, die Kralle (102, 302) in der Geschlossenstellung zu verriegeln;
**gekennzeichnet**
**durch** eine Einstelleinrichtung (217, 317), die dazu ausgebildet ist, die Vorbestimmtheit der lichten Weite der Kralle (102, 302) an unterschiedliche Bremsscheiben anzupassen,
wobei die Vorbestimmtheit der lichten Weite der Kralle (102, 302) mittels der Einstelleinrichtung (217, 317) derart anpassbar ist, dass die lichte Weite, mit welcher die Kralle (102, 302) in der Geschlossenstellung einen Aufnahmeraum für die Bremsscheibe effektiv begrenzt, für ein nachfolgendes wiederholtes Befestigen und Verriegeln des Bremsscheibenschlosses (100) an der Bremsscheibe vorbestimmt ist.

2. Bremsscheibenschloss (100) nach Anspruch 1,
wobei der Verriegelungsmechanismus (108, 308) mit dem ersten Krallenabschnitt (104; 304) fest verbunden ist, wobei der zweite Krallenabschnitt (106, 306) relativ zu dem ersten Krallenabschnitt (104, 304) und zu dem Verriegelungsmechanismus (108, 308) beweglich ist;
und/oder
wobei das Bremsscheibenschloss (100) einen Schlosskörper (114) aufweist, in dem der Verriegelungsmechanismus (108, 308) gehalten ist und an dem der zweite Krallenabschnitt (106, 306) beweglich geführt ist; und/oder
wobei der erste Krallenabschnitt (104, 304) und der zweite Krallenabschnitt (106, 306) zwischen der Offenstellung und der Geschlossenstellung linear relativ zueinander beweglich sind.

3. Bremsscheibenschloss (100) nach einem der vorhergehenden Ansprüche, wobei wenigstens einer der Krallenabschnitte (104, 106, 304, 306) eine Hakenstruktur (105, 107, 305, 307) aufweist, welche dazu ausgebildet ist, den Abschnitt der Bremsscheibe zu umgreifen, und welche einen wirksamen Abstand zu dem Verriegelungsmechanismus (108, 308) einnimmt, wenn die Kralle (102, 302) geschlossen und verriegelt ist,
wobei die Einstelleinrichtung (217, 317) dazu ausgebildet ist, den wirksamen Abstand der Hakenstruktur (105, 107, 305, 307) zu dem Verriegelungsmechanismus (108, 308) anzupassen.

4. Bremsscheibenschloss (100) nach einem der vorhergehenden Ansprüche, wobei in einem Gebrauchszustand des Bremsscheibenschlosses (100) der erste Krallenabschnitt (104, 304) in einer anpassbaren fixen Befestigungsposition relativ zu dem Verriegelungsmechanismus (108, 308) befestigt ist, wobei die Einstelleinrichtung (217, 317) dazu ausgebildet ist, die Befestigungsposition des ersten Krallenabschnitts (104, 304) relativ zu dem Verriegelungsmechanismus (108, 308) anzupassen.

5. Bremsscheibenschloss (100) nach Anspruch 4,
wobei das Bremsscheibenschloss (100) einen Halter aufweist, der den Verriegelungsmechanismus (108, 308) trägt, wobei der erste Krallenabschnitt (104, 304) an dem Halter befestigt ist;
und/oder
wobei die Einstelleinrichtung (217, 317) eine dem Verriegelungsmechanismus (108, 308) zugeordnete Eingriffskontur (218) und eine dem ersten Krallenabschnitt (104, 304) zugeordnete Eingriffsgegenkontur (220) aufweist, wobei die Eingriffskontur (218) und die Eingriffsgegenkontur (220) in verschiedenen Befestigungspositionen in Eingriff miteinander bringbar sind und in der jeweiligen Befestigungsposition aneinander sicherbar sind; und/oder
wobei der erste Krallenabschnitt (104, 304) starr ausgebildet ist und/oder eine feste Länge aufweist.

6. Bremsscheibenschloss (100) nach Anspruch 3,
wobei der wenigstens eine Krallenabschnitt (104, 106, 304, 306) eine Verriegelungsstruktur (309) aufweist, mit welcher der Verriegelungsmechanismus (108, 308) in Eingriff steht, wenn die Kralle (102, 302) geschlossen und verriegelt ist, wobei die Einstelleinrichtung (217, 317) dazu ausgebildet ist, eine wirksame Länge zwischen der Hakenstruktur (105, 107, 305, 307) und der Verriegelungsstruktur (309) des wenigstens einen Krallenabschnitts (104, 106, 304, 306) anzupassen;
oder
wobei das Bremsscheibenschloss (100) einen Halter aufweist, der den Verriegelungsmechanismus (108, 308) trägt, wobei der wenigstens eine Krallenabschnitt (104, 106, 304, 306) ein Verbindungsende aufweist, an welchem der wenigstens eine Krallenabschnitt (104, 106, 304, 306) in einer unveränderlichen Position mit dem Halter verbunden ist, wobei die Einstelleinrichtung (217, 317) dazu ausgebildet ist, eine wirksame Länge zwischen der Hakenstruktur (105, 107, 305, 307) und dem Verbindungsende des wenigstens einen Krallenabschnitts (104, 106, 304, 306) anzupassen.

7. Bremsscheibenschloss (100) nach Anspruch 6,
wobei die Einstelleinrichtung (217, 317) eine Gewindestange (312) und ein entlang der Gewindestange (312) versetzbares Innengewinde (313) aufweist, durch welche die wirksame Länge des wenigstens einen Krallenabschnitts (104, 106, 304, 306) anpassbar ist.

8. Bremsscheibenschloss (100) nach einem der vorhergehenden Ansprüche, wobei die Einstelleinrichtung (217, 317) lediglich infolge einer Entriegelung des Verriegelungsmechanismus (108, 308) betätigbar ist, um die vorbestimmte lichte Weite der Kralle (102, 302) an unterschiedliche Bremsscheiben anzupassen.

9. Bremsscheibenschloss (100) nach einem der vorhergehenden Ansprüche, wobei die Einstelleinrichtung (217, 317) ein Sicherungselement (314) aufweist, das dazu ausgebildet ist, eine Einstellung der vorbestimmten lichten Weite der Kralle (102, 302) zu sichern, wobei das Sicherungselement (314) von der Bremsscheibe oder von einem Teil des Bremsscheibenschlosses (100) verdeckt und/oder das Sicherungselement (314) gegen eine Bewegung blockiert ist, wenn das Bremsscheibenschloss (100) an der Bremsscheibe angebracht ist und wenn die Kralle (102, 302) geschlossen und verriegelt ist;
und/oder
wobei die Kralle (102, 302) in Richtung der Offenstellung vorgespannt ist.

10. Bremsscheibenschloss (100) nach einem der vorhergehenden Ansprüche, wobei der Verriegelungsmechanismus (108, 308) einen Riegel aufweist, der in einer Verriegelungsstellung - wenn die Kralle (102, 302) geschlossen ist - den zweiten Krallenabschnitt (106, 306) an dem ersten Krallenabschnitt (104, 304) verriegelt und in einer Freigabestellung den zweiten Krallenabschnitt (106, 306) für eine Bewegung relativ zu dem ersten Krallenabschnitt (104, 304) freigibt.

11. Bremsscheibenschloss (100) nach Anspruch 10,
wobei der Riegel in Richtung der Verriegelungsstellung vorgespannt ist,
wobei der Riegel dazu ausgebildet ist, durch Bewegen der Kralle (102, 302) aus der Offenstellung in die Geschlossenstellung zunächst in Richtung der Freigabestellung zurückgedrängt zu werden und sodann aufgrund der Vorspannung in die Verriegelungsstellung zu schnappen;
und/oder
wobei der Riegel drehbar gelagert ist und eine Mantelfläche 222 mit einer tangentialen Aussparung (208) aufweist, wobei die tangentiale Aussparung (208) in der Freigabestellung des Riegels eine Verriegelungserhebung (204) des zweiten Krallenabschnitts (106, 306) freigibt.

12. Bremsscheibenschloss (100) nach einem der vorhergehenden Ansprüche, wobei wenigstens einer der Krallenabschnitte (104, 106, 304, 306) dazu ausgebildet ist, in eine Öffnung der Bremsscheibe einzugreifen und hierdurch das Bremsscheibenschloss (100) an der Bremsscheibe hängend zu halten.

13. Bremsscheibenschloss (100) nach einem der vorhergehenden Ansprüche, wobei das Bremsscheibenschloss (100) eine Alarmeinrichtung (110, 310) zum Ausgeben eines Alarmsignals aufweist, wobei die Alarmeinrichtung (110, 310) dazu ausgebildet ist, durch Bewegen der Kralle (102, 302) in die Geschlossenstellung aktiviert zu werden und durch Bewegen der Kralle (102, 302) aus der Geschlossenstellung in die Offenstellung deaktiviert zu werden.

14. Bremsscheibenschloss (100) nach Anspruch 13,
wobei die Alarmeinrichtung (110, 310) einen Aktivierungsschalter (112) aufweist, der dazu ausgebildet ist, in der Geschlossenstellung von dem zweiten Krallenabschnitt (106, 306) oder von einem mit dem zweiten Krallenabschnitt (106, 306) verbundenen Teil des Bremsscheibenschlosses (100) automatisch betätigt zu werden,
und/oder
wobei die Alarmeinrichtung (110, 310) in einem Gehäuseabschnitt (132) des Bremsscheibenschlosses (100) angeordnet ist, der mit dem ersten Krallenabschnitt (104, 304) fest verbunden ist, wobei die Alarmeinrichtung (110, 310) lediglich infolge einer Entriegelung des Verriegelungsmechanismus (108, 308) zugänglich ist.

15. Bremsscheibenschloss (100) nach einem der vorhergehenden Ansprüche, wobei das Bremsscheibenschloss (100) einen ersten, dem ersten Krallenabschnitt (104, 304) zugeordneten Sicherungsabschnitt (120) und einen zweiten, dem zweiten Krallenabschnitt (106, 306) zugeordneten Sicherungsabschnitt (122) aufweist, wobei der erste Sicherungsabschnitt (120) und der zweite Sicherungsabschnitt (122) in der Offenstellung der Kralle (102, 302) eine Aufnahmeöffnung (123) zum Einführen einer Öse eines flexiblen Sicherungsteils (124), insbesondere einer Kette, bilden, und wobei der erste Sicherungsabschnitt (120) und der zweite Sicherungsabschnitt (122) in der Geschlossenstellung der Kralle (102, 302) eine umfänglich geschlossene Begrenzung der Aufnahmeöffnung (123) bilden, um die eingeführte Öse an dem Bremsscheibenschloss (100) zu sichern.

## Claims

1. A brake disk lock (100),
having a claw (102, 302) comprising a first claw section (104, 304) and a second claw section (106, 306) which are movable relative to each other between an open position and a closed position of the claw (102, 302), wherein, in the closed position, the claw (102, 302) comprises a predetermined clearing width to engage around a section of a brake disk of a two-wheeler; and
further having a locking mechanism (108, 308) which is configured to lock the claw (102, 302) in the closed position,
**characterized by**
an adjustment device (217, 317) configured to adjust the predetermination of the clearing width of the claw (102, 302) to different brake disks, wherein the predetermination of the clearing width of the claw (102, 302) can be adjusted by means of the adjustment device (217, 317) such that the clearing width with which the claw (102, 301) effectively limits a receiving space for the brake disk in the closed position is predetermined for a subsequent repeated fastening and locking of the brake disk lock (100) to the brake disk.

2. A brake disk lock (100) according to claim 1,
wherein the locking mechanism (108, 308) is fixedly connected to the first claw section (104; 304), wherein the second claw section (106, 306) is movable relative to the first claw section (104, 304) and to the locking mechanism (108, 308);
and/or
wherein the brake disk lock (100) comprises a lock body (114) in which the locking mechanism (108, 308) is held and at which the second claw section (106, 306) is movably guided;
and/or
wherein the first claw section (104, 304) and the second claw section (106, 306) are linearly movable relative to each other between the open position and the closed position.

3. A brake disk lock (100) according to one of the preceding claims,
wherein at least one of the claw sections (104, 106, 304, 306) comprises a hook structure (105, 107, 305, 307) which is configured to engage around the section of the brake disk, and which occupies an effective distance from the locking mechanism (108, 308) when the claw (102, 302) is closed and locked,
wherein the adjustment device (217, 317) is configured to adjust the effective distance of the hook structure (105, 107, 305, 307) to the locking mechanism (108, 308).

4. A brake disk lock (100) according to any one of the preceding claims,
wherein, in a state of use of the brake disk lock (100), the first claw section (104, 304) is mounted in an adjustable fixed mounting position relative to the locking mechanism (108, 308),
wherein the adjustment device (217, 317) is configured to adjust the mounting position of the first claw section (104, 304) relative to the locking mechanism (108, 308).

5. A brake disk lock (100) according to claim 4,
wherein the brake disk lock (100) comprises a holder which supports the locking mechanism (108, 308), wherein the first claw section (104, 304) is mounted at the holder;
and/or
wherein the adjustment device (217, 317) comprises an engagement contour (218) associated with the locking mechanism (108, 308) and an engagement counter-contour (220) associated with the first claw section (104, 304), wherein the engagement contour (218) and the engagement counter-contour (220) can be brought into engagement with each other in different mounting positions and can be secured to each other in the respective mounting position;
and/or
wherein the first claw section (104, 304) is configured as rigid and/or comprises a fixed length.

6. A brake disk lock (100) according to claim 3,
wherein the at least one claw section (104, 106, 304, 306) comprises a locking structure (309) with which the locking mechanism (108, 308) engages when the claw (102, 302) is closed and locked, wherein the adjustment device (217, 317) is configured to adjust an effective length between the hook structure (105, 107, 305, 307) and the locking structure (309) of the at least one claw section (104, 106, 304, 306);
or
wherein the brake disk lock (100) comprises a holder which supports the locking mechanism (108, 308), wherein the at least one claw section (104, 106, 304, 306) comprises a connecting end at which the at least one claw section (104, 106, 304, 306) is connected to the holder in an unchanging position, wherein the adjustment device (217, 317) is configured to adjust an effective length between the hook structure (105, 107, 305, 307) and the connecting end of the at least one claw section (104, 106, 304, 306).

7. A brake disk lock (100) according to claim 6,
wherein the adjustment device (217, 317) comprises a threaded rod (312) and an internal thread (313) displaceable along the threaded rod (312), by means of which the effective length of the at least one claw section (104, 106, 304, 306) is adjustable.

8. A brake disk lock (100) according to any one of the preceding claims,
wherein the adjustment device (217, 317) can only be actuated as a result of an unlocking of the locking mechanism (108, 308), in order to adjust the predetermined clearing width of the claw (102, 302) to different brake disks.

9. A brake disk lock (100) according to any one of the preceding claims,
wherein the adjustment device (217, 317) comprises a securing element (314) which is configured to secure an adjustment of the predetermined clearing width of the claw (102, 302), wherein the securing element (314) is covered by the brake disk or by a part of the brake disk lock (100) and/or the securing element (314) is blocked against movement when the brake disk lock (100) is mounted at the brake disk and when the claw (102, 302) is closed and locked;
and/or
wherein the claw (102, 302) is biased towards the open position.

10. A brake disk lock (100) according to any one of the preceding claims, wherein the locking mechanism (108, 308) comprises a latch which in a locking position, when the claw (102, 302) is closed, locks the second claw section (106, 306) to the first claw section (104, 304) and, in a release position, releases the second claw section (106, 306) for movement relative to the first claw section (104, 304).

11. A brake disk lock (100) according to claim 10,
wherein the latch is biased towards the locking position, wherein the latch is configured to be first urged back towards the release position due to movement of the claw (102, 302) from the open position to the closed position, and then to snap into the locking position due to the bias; and/or
wherein the latch is rotatably mounted and comprises a peripheral surface (222) with a tangential recess (208), wherein the tangential recess (208) releases a locking protrusion (204) of the second claw section (106, 306) in the release position of the latch.

12. A brake disk lock (100) according to any one of the preceding claims, wherein at least one of the claw sections (104, 106, 304, 306) is configured to engage in an opening of the brake disk and thereby hold the brake disk lock (100) suspended at the brake disk.

13. A brake disk lock (100) according to any one of the preceding claims, wherein the brake disk lock (100) comprises an alarm device (110, 310) for outputting an alarm signal, wherein the alarm device (110, 310) is configured to be activated by moving the claw (102, 302) to the closed position and to be deactivated by moving the claw (102, 302) from the closed position to the open position.

14. A brake disk lock (100) according to claim 13,
wherein the alarm device (110, 310) comprises an activation switch (112) which is configured to be automatically actuated in the closed position by the second claw section (106, 306) or by a part of the brake disk lock (100) connected to the second claw section (106, 306);
and/or
wherein the alarm device (110, 310) is arranged in a housing section (132) of the brake disk lock (100) which is fixedly connected to the first claw section (104, 304), wherein the alarm device (110, 310) is only accessible as a result of an unlocking of the locking mechanism (108, 308).

15. A brake disk lock (100) according to any one of the preceding claims, wherein the brake disk lock (100) comprises a first securing section (120) associated with the first claw section (104, 304) and a second securing section (122) associated with the second claw section (106, 306), wherein, in the open position of the claw (102, 302), the first securing section (120) and the second securing section (122) form a receiving opening (123) for the insertion of an eyelet of a flexible securing member (124), in particular a chain, and wherein, in the closed position of the claw (102, 302), the first securing section (120) and the second securing section (122) form a circumferentially closed boundary of the receiving opening (123) for securing the inserted eyelet at the brake disk lock (100).

## Revendications

1. Antivol pour disque de frein (100),
comprenant une griffe (102, 302) ayant une première portion de griffe (104, 304) et une deuxième portion de griffe (106, 306) qui sont mobiles l'une par rapport à l'autre entre une position ouverte et une position fermée de la griffe (102, 302), la griffe (102, 302) ayant une largeur intérieure prédéterminée dans la position fermée pour s'engager autour d'une partie d'un disque de frein d'un deux-roues ; et
comprenant en outre un mécanisme de verrouillage (108, 308) conçu pour verrouiller la griffe (102, 302) dans la position fermée ;
**caractérisé par**
un dispositif de réglage (217, 317) conçu pour adapter la prédétermination de la largeur intérieure de la griffe (102, 302) à différents disques de frein, sachant que la prédétermination de la largeur intérieure de la griffe (102, 302) peut être adaptée au moyen du dispositif de réglage (217, 317) de telle sorte que la largeur intérieure, avec laquelle la griffe (102, 302) délimite efficacement un espace de réception pour le disque de frein dans la position fermée, est prédéterminée pour une fixation et un verrouillage répétés ultérieurs de l'antivol pour disque de frein (100) sur le disque de frein.

2. Antivol pour disque de frein (100) selon la revendication 1,
dans lequel le mécanisme de verrouillage (108, 308) est relié solidairement à la première portion de griffe (104 ; 304), la deuxième portion de griffe (106, 306) étant mobile par rapport à la première portion de griffe (104, 304) et au mécanisme de verrouillage (108, 308) ;
et/ou
l'antivol pour de disque de frein (100) comprend un corps d'antivol (114) dans lequel le mécanisme de verrouillage (108, 308) est retenu et sur lequel la deuxième portion de griffe (106, 306) est guidée de manière mobile ; et/ou
la première portion de griffe (104, 304) et la deuxième portion de griffe (106, 306) sont mobiles linéairement l'une par rapport à l'autre entre la position ouverte et la position fermée.

3. Antivol pour disque de frein (100) selon l'une des revendications précédentes,
dans lequel l'une au moins des portions de griffe (104, 106, 304, 306) comprend une structure de crochet (105, 107, 305, 307) qui est conçue pour s'engager autour de ladite partie du disque de frein et qui se trouve à une distance effective du mécanisme de verrouillage (108, 308) lorsque la griffe (102, 302) est fermée et verrouillée,
le dispositif de réglage (217, 317) est conçu pour adapter la distance effective de la structure de crochet (105, 107, 305, 307) par rapport au mécanisme de verrouillage (108, 308).

4. Antivol pour disque de frein (100) selon l'une des revendications précédentes,
dans lequel, dans un état d'utilisation de l'antivol pour disque de frein (100), la première portion de griffe (104, 304) est fixée dans une position de fixation fixe adaptable par rapport au mécanisme de verrouillage (108, 308), le dispositif de réglage (217, 317) étant conçu pour adapter la position de fixation de la première portion de griffe (104, 304) par rapport au mécanisme de verrouillage (108, 308).

5. Antivol pour disque de frein (100) selon la revendication 4,
dans lequel l'antivol pour disque de frein (100) comprend un support portant le mécanisme de verrouillage (108, 308), la première portion de griffe (104, 304) étant fixée au support ;
et/ou
le dispositif de réglage (217, 317) présente un contour d'engagement (218) associé au mécanisme de verrouillage (108, 308) et un contre-contour d'engagement (220) associé à la première portion de griffe (104, 304), le contour d'engagement (218) et le contre-contour d'engagement (220) pouvant être mis en prise l'un avec l'autre dans différentes positions de fixation et pouvant être bloqués l'un à l'autre dans la position de fixation respective ; et/ou
la première portion de griffe (104, 304) est rigide et/ou présente une longueur fixe.

6. Antivol pour disque de frein (100) selon la revendication 3,
dans lequel ladite au moins une portion de griffe (104, 106, 304, 306) comprend une structure de verrouillage (309) avec laquelle le mécanisme de verrouillage (108, 308) est en prise lorsque la griffe (102, 302) est fermée et verrouillée, le dispositif de réglage (217, 317) étant conçu pour adapter une longueur effective entre la structure de crochet (105, 107, 305, 307) et la structure de verrouillage (309) de ladite au moins une portion de griffe (104, 106, 304, 306) ;
ou
l'antivol pour disque de frein (100) comprend un support portant le mécanisme de verrouillage (108, 308), ladite au moins une portion de griffe (104, 106, 304, 306) ayant une extrémité de liaison à laquelle ladite au moins une portion de griffe (104, 106, 304, 306) est reliée au support dans une position invariable, le dispositif de réglage (217, 317) étant conçu pour adapter une longueur effective entre la structure de crochet (105, 107, 305, 307) et l'extrémité de liaison de ladite au moins une portion de griffe (104, 106, 304, 306).

7. Antivol pour disque de frein (100) selon la revendication 6,
dans lequel le dispositif de réglage (217, 317) comprend une tige filetée (312) et un taraudage (313) déplaçable le long de la tige filetée (312), grâce auxquels la longueur effective de ladite au moins une portion de griffe (104, 106, 304, 306) peut être adaptée.

8. Antivol pour disque de frein (100) selon l'une des revendications précédentes,
dans lequel le dispositif de réglage (217, 317) ne peut être actionné qu'en réponse à un déverrouillage du mécanisme de verrouillage (108, 308) afin d'adapter la largeur intérieure prédéterminée de la griffe (102, 302) à différents disques de frein.

9. Antivol pour disque de frein (100) selon l'une des revendications précédentes,
dans lequel le dispositif de réglage (217, 317) comprend un élément de blocage (314) conçu pour bloquer un réglage de la largeur intérieure prédéterminée de la griffe (102, 302), l'élément de blocage (314) étant masqué par le disque de frein ou par une partie de l'antivol pour disque de frein (100) et/ou l'élément de blocage (314) étant arrêté à l'encontre d'un mouvement lorsque l'antivol pour disque de frein (100) est monté sur le disque de frein et lorsque la griffe (102, 302) est fermée et verrouillée ;
et/ou
la griffe (102, 302) est précontrainte en direction de la position ouverte.

10. Antivol pour disque de frein (100) selon l'une des revendications précédentes,
dans lequel le mécanisme de verrouillage (108, 308) comprend un verrou qui, dans une position de verrouillage - lorsque la griffe (102, 302) est fermée - verrouille la deuxième portion de griffe (106, 306) sur la première portion de griffe (104, 304) et, dans une position de libération, libère la deuxième portion de griffe (106, 306) pour un mouvement par rapport à la première portion de griffe (104, 304).

11. Antivol pour disque de frein (100) selon la revendication 10,
dans lequel le verrou est précontraint en direction de la position de verrouillage, le verrou étant conçu pour être repoussé d'abord en direction de la position de libération par le déplacement de la griffe (102, 302) de la position ouverte à la position fermée, puis pour s'encliqueter dans la position de verrouillage en raison de la précontrainte ;
et/ou
le verrou est monté mobile en rotation et présente une surface enveloppe (222) ayant un évidement tangentiel (208), l'évidement tangentiel (208) libérant, dans la position de libération du verrou, une bosse de verrouillage (204) de la deuxième portion de griffe (106, 306).

12. Antivol pour disque de frein (100) selon l'une des revendications précédentes,
dans lequel l'une au moins des portions de griffe (104, 106, 304, 306) est conçue pour s'engager dans une ouverture du disque de frein et pour ainsi maintenir l'antivol pour disque de frein (100) suspendu au disque de frein.

13. Antivol pour disque de frein (100) selon l'une des revendications précédentes,
dans lequel l'antivol pour disque de frein (100) comprend un dispositif d'alarme (110, 310) pour émettre un signal d'alarme, le dispositif d'alarme (110, 310) étant conçu pour être activé par un déplacement de la griffe (102, 302) vers la position fermée et pour être désactivé par un déplacement de la griffe (102, 302) de la position fermée vers la position ouverte.

14. Antivol pour disque de frein (100) selon la revendication 13,
dans lequel le dispositif d'alarme (110, 310) comprend un commutateur d'activation (112) conçu pour être actionné automatiquement, dans la position fermée, par la deuxième portion de griffe (106, 306) ou par une partie de l'antivol pour disque de frein (100) reliée à la deuxième portion de griffe (106, 306) ;
et/ou
le dispositif d'alarme (110, 310) est disposé dans une partie de boîtier (132) de l'antivol pour disque de frein (100) qui est reliée solidairement à la première portion de griffe (104, 304), le dispositif d'alarme (110, 310) n'étant accessible que suite à un déverrouillage du mécanisme de verrouillage (108, 308).

15. Antivol pour disque de frein (100) selon l'une des revendications précédentes,
dans lequel l'antivol pour disque de frein (100) comprend une première partie de blocage (120) associée à la première portion de griffe (104, 304) et une deuxième partie de blocage (122) associée à la deuxième portion de griffe (106, 306), la première partie de blocage (120) et la deuxième partie de blocage (122) formant, en position ouverte de la griffe (102, 302), une ouverture de réception (123) pour insérer un œillet d'une pièce de blocage flexible (124), en particulier d'une chaîne, et la première partie de blocage (120) et la deuxième partie de blocage (122) formant, dans la position fermée de la griffe (102, 302), une délimitation fermée sur le pourtour de l'ouverture de réception (123), afin de bloquer l'œillet inséré sur l'antivol pour disque de frein (100).
